# EUROPÄISCHE PATENTSCHRIFT

(11) **EP 2 702 356 B1**
(45) Veröffentlichungstag und Bekanntmachung des Hinweises auf die Patenterteilung: **30.08.2017**
(21) Anmeldenummer: 12722671.0
(22) Anmeldetag: 22.04.2012
(51) Int. Cl.: G01C 3/04, G02B 23/18

(54) **BINOKULARES FERNROHR MIT INTEGRIERTEM LASER-ENTFERNUNGSMESSER**
BINOCULAR TELESCOPE HAVING AN INTEGRATED LASER RANGE FINDER
JUMELLES AVEC TÉLÉMÈTRE LASER INTÉGRÉ

(30) Priorität: 25.04.2011 DE 202011005580 U; 13.04.2012 DE 102012007464
(43) Veröffentlichungstag der Anmeldung: 05.03.2014
(73) Patentinhaber: Leica Camera AG, 35606 Solms (DE); Perger, Andreas, 1230 Wien (AT)
(72) Erfinder: PERGER, Andreas, A-1230 Wien (AT); KALAITZIS, Ioannis, 35606 Solms (DE); POBENBERGER, Ernst, A-2483 Weigelsdorf (AT)
(74) Vertreter: Stamer, Jan
(86) Internationale Anmeldenummer: PCT/DE2012/100113
(87) Internationale Veröffentlichungsnummer: WO 2012/146239

(56) Entgegenhaltungen:
- EP-A1- 0 961 147
- DE-B4-102004 054 182
- US-A1- 2009 303 457

## Beschreibung

Die Erfindung betrifft ein binokulares Fernrohr mit integriertem Laser-Entfernungsmesser. Aus den Druckschriften EP 2 078 975 A1, DE 10 2007 007 380 A1, US 2010/0 265 490 A1 sind Ferngläser mit integriertem Entfernungsmesser bekannt.

Ein aus DE 10 2004 054 182 B4 bekanntes Fernrohr besteht aus getrennten ersten und zweiten Fernrohrtuben mit jeweils einem Okular und einem fokussierbaren Objektiv. Die Fernrohrtuben sind über eine Knickbrücke zur Augenweiteneinstellung derart miteinander verbunden, dass die Fernrohrtuben auseinander geklappt werden können. Die Knickbrücke enthält okularseitige und davon derart getrennte objektivseitige Gelenkelemente, dass bei ausgeklappten Fernrohrtuben eine Öffnung zwischen den Gelenkelementen entsteht. In die Öffnung sind Verbindungsleitungen eingefügt. Die okularseitigen Gelenkelemente bestehen aus Gelenkösen, die jeweils mit dem ersten und dem zweiten Fernrohrtubus verbunden sind und in die eine Gelenkachse eingesetzt ist. Auf der Gelenkachse ist ein Drehknopf zur Fokussierung der in den Fernrohrtuben angeordneten Objektive gelagert.

In dem ersten Fernrohrtubus sind auch der Empfänger eines Laser-Entfernungsmessers sowie ein opto-elektronisches Anzeigeelement in fester Anordnung zur optischen Beobachtungsachse des ersten Fernrohrtubus angeordnet. Der Sender des Laser-Entfernungsmessers ist mit seiner Sendeachse parallel zur optischen Beobachtungsachse des ersten Fernrohrtubus und fluchtend zur Gelenkachse des okularseitigen Gelenkelements an einem mit dem ersten Fernrohrtubus verbundenen Teil des objektivseitigen Gelenkelements angeordnet.

Das objektivseitige Gelenkelement besteht aus zwei in axialer Richtung übereinander liegenden und an den beiden Fernrohtuben jeweils befestigten Laschen, die eine zentrale Bohrung aufweisen, in die ein zylindrisches Hülsenteil als zentrierendes Element eingesetzt ist. Das zylindrische Hülsenteil ist mit der Lasche fest verbunden, die in dem ersten Fernrohrtubus befestigt ist. Das Hülsenteil dient zur Aufnahme des Senders des Laser-Entfernungsmessers.

Das okularseitige und das objektivseitige Gelenkelement sind durch eine übergreifende Gehäuseschale zum Schutz der zwischen ihnen liegenden Verbindungsleitungen abgedeckt. Zusätzliche elektronische Messvorrichtungen, ein Batteriefach und Betätigungstaster sind in dem zweiten Fernrohrtubus angeordnet. Die Verbindungsleitungen zum Laser-Entfernungsmesser und Anzeigeelement sind in dem von der Gehäuseschale abgedeckten Bereich der Knickbrücke zwischen den okularseitigen und den objektivseitigen Gelenkelementen angeordnet. Die Verbindungsleitungen können auch eng benachbart zu den Gelenkelementen von den in ihrer Nähe angebrachten elektronischen Bauteilen zu den in dem anderen Fernrohrtubus angeordneten elektronischen Bauteilen verlegt werden, wobei die jeweiligen Gelenkelemente mit einer separaten Abdeckung versehen werden können. Zwischen den okularseitigen und den objektivseitigen Gelenkelementen kann dann ein begrenzter freier Durchgriff zwischen den Fernrohrtuben entstehen.

Aus EP 0 961 147 A1 ist ein binokulares Fernrohr bekannt, bei dem das okularseitige und das objektivseitige Gelenkelement als getrennte Brückenkörper ausgeführt sind, zwischen denen ein ausgedehnter Durchgriff besteht. Beide Brückenkörper sind mit zueinander fluchtenden Gelenkachsen versehen. Ein Laser-Entfernungsmesser ist nicht vorgesehen.

Aus der Druckschrift EP 2 085 746 A2 ist ein binokulares Fernrohr mit zwei getrennten visuellen Strahlengängen und einem Laser-Entfernungsmesser bekannt, bei dem zwischen den Gehäuseteilen für die visuellen Strahlengänge ein Freiraum besteht. Ein Teil der Strahlengänge für den Laser-Entfernungsmesser ist in einen ersten visuellen Strahlengang und ein weiterer Teil in den zweiten visuellen Strahlengang integriert.

Der Erfindung lag die Aufgabe zugrunde, das bekannte binokulare Fernrohr mit integriertem Laser-Entfernungsmesser und Knickbrücke so weiterzubilden, dass ein für die Finger des Benutzers freier Durchgriff zwischen den Gelenkelementen vorgesehen werden kann, um die Handhabbarkeit des Fernrohres zu verbessern.

Diese Aufgabe wird erfindungsgemäß dadurch gelöst, dass alle elektronischen und opto-elektronischen Bauelemente des Fernglases gemeinsam innerhalb nur eines Fernrohrtubus und/oder an mit diesem Fernrohrtubus fest verbundenen Anbauteilen angeordnet sind. Die außerhalb des Fernrohrtubus angeordneten Elemente werden grundsätzlich danach ausgewählt, dass für ihre Kommunikation mit den innerhalb des Fernrohrtubus angeordneten Elementen ausschließlich mit einer Isolierung versehene Signalleitungen erforderlich sind, die in die Übergangsstellen zum Fernrohrtubus luftdicht eingesetzt oder eingekittet werden können. Das erleichtert die übliche dauerhafte Befüllung des Fernrohrtubus mit einem inerten Gas, wie z.B. Stickstoff. Außerdem werden Biegungen und Spannungen der Signalleitungen bei der Augenweiteneinstellung vermieden, die zum Einklemmen oder der Beschädigung der Signalleitungen führen können. Da die Signalleitungen nur zwischen zueinander feststehenden mechanischen Bauteilen angeordnet sind, können die Signalleitungen kurz und direkt verlegt werden. Die Gelenkelemente können okularseitig und objektivseitig als brückenbildende Gelenkkörper zwischen den Fernrohrtuben ausgeformt sein. Damit liegen keine Leitungen außerhalb eines abgeschlossenen Gehäuses.

Aufgrund der möglichen kurzen Leitungswege, der Anordnung aller elektronischen Bauelemente innerhalb nur eines zusammenhängenden Tubusgehäuses (Fernrohrtubus mit angeformtem Gelenkelement) und die Ausführung des Tubusgehäuses als Metallkörper sind elektronischen Abstrahlungen und die Störempfindlichkeit gegenüber äußeren Strahlern äußerst gering.

Eine wesentliche Verbesserung gegenüber der bekannten Konstruktion des objektivseitigen Gelenkelementes besteht darin, dass die an dem Fernrohrtubus mit integriertem Laser-Entfernungsmesser angeordnete erste Lasche in Beobachtungsrichtung auf die mit dem anderen Fernrohrtubus verbundene zweite Lasche folgend angeordnet ist. Die Laschen können an ihren freien Enden mit zylindrischen Töpfen versehen sein, wobei der Topf an der zweiten Lasche schwenkbar in den Topf an der ersten Lasche eingesetzt ist. In der Seitenwand des äußeren Topfes ist eine Ausnehmung vorhanden, die dem Knickbereich um die Gelenkachse im okularseitigen Gelenkelement entspricht.

An den Topfböden können die beiden Laschen so miteinander verschraubt werden, dass der durch die Gelenkachse festgelegte Knickbereich nicht behindert wird. Bei der Verschraubung kann zwischen die Topfböden ein Federteller eingefügt werden, der die beiden Laschen in axialer Richtung verspannt. Die Knickbrücke erhält dadurch über die gesamte Länge der Fernrohrtuben eine gute Verwindungssteifigkeit, die wegen der ineinander eingesetzten zylindrischen Töpfe auch in jeder Knickstellung gewährleistet ist.

An die mit dem ersten Fernrohrtubus verbundene Lasche kann ein objektivseitig offenes und gegenüber dem Fernrohrtubus abgegrenztes Gehäuse angeformt sein, das mit einer Frontplatte verschließbar ist. An der Frontplatte können der Sender des Laser-Entfernungsmessers, mindestens ein Umlenkspiegel zur Ausrichtung der Sendeachse und ein Sendeobjektiv zur Kollimation des Sendestrahles angeordnet sein. Das ermöglicht eine Justierung des Sendestrahles senkrecht zur Ebene der Frontplatte vor der Montage der Frontplatte an dem Gehäuse. Für die Anordnung des Sendestrahlenganges mit Spiegelumlenkung wird nur eine geringe Bauhöhe auf der Frontplatte benötigt. Das Sendeobjektiv kann zur Kollimation und Ausrichtung der Sendeachse parallel zur Beobachtungsrichtung des zugehörigen Fernrohrtubus in drei Achsen justierbar sein.

Aufgrund des frontseitig angeordneten Laser-Senders und der Strahlenführung mit geringer Bauhöhe im wesentlichen parallel zur Frontplatte kann die Anbringung des objektivseitigen Gelenkelements insgesamt sehr weit nach vorne abgrenzend mit den Objektivtuben verschoben werden. Damit wird der für den Fingerdurchgriff zur Verfügung stehende Bereich zwischen den okularseitigen und den objektivseitigen Gelenkelementen wesentlich vergrößert.

Zweckmäßigerweise kann in das Gehäuse an der in Gebrauchsstellung des Fernrohres unteren Seite ein verschließbares Einschubfach eingeformt sein. Das Einschubfach kann vorzugsweise mit Kontakten zum Anschluss einer Batterie ausgestattet sein. Zusätzlich kann das Einschubfach auch mit Kontakten zum Anschluss auswechselbarer Speicherkarten und/oder einer Schnittstelle zur Datenübertragung mit Kabel oder zur drahtlosen Datenübertragung ausgestattet sein.

Auf der in Gebrauchsstellung oberen Fläche des dem ersten Fernrohrtubus zugeordneten Teiles des okularseitigen Gelenkelements können ein oder mehrere Schalter oder Taster zu Betätigung des Laser-Entfernungsmessers und/oder der Menüsteuerung des Anzeigeelementes angeordnet sind. Die Schalter oder Taster befinden sich dann in griffgünstiger Lage bei Halten des Fernrohres vor den Augen des Benutzers.

In an sich bekannter Weise können dem Laser-Entfernungsmesser innerhalb des ersten Fernrohrtubus Druck-, Temperatur-, Neigungs-, Feuchte- und/oder Richtungs-Sensoren zugeordnet sein, so dass mit Hilfe eines ebenfalls eingebauten Rechners unterschiedliche Auswertungen der Entfernungsmessung sowie ballistische Berechnungen der Flugbahn eines Geschosses unter Berücksichtigung der Entfernung, Neigung, des Luftdruckes und der Luftfeuchte mit einer grafischen Darstellung auf dem Anzeigeelement generierbar sind.

Die Druck-, Feuchte- und/oder Temperatur-Sensoren werden zweckmäßigerweise in einem äußeren Gehäusebereich des ersten Fernrohrtubus angebracht, um Messfehler aufgrund einer unter Überdruck stehenden Gasbefüllung des Innenraumes des Fernrohrtubus zu vermeiden. Vorzugsweise werden diese Sensoren in eine äußere Ansetzflächefläche des an dem ersten Fernrohrtubus angesetzten Okulartubus eingesetzt, so dass sie außerhalb möglicher Handauflageflächen des Benutzers am Fernrohrtubus liegen.

Über die vorgesehene Schnittstelle können auch benutzerspezifische Geschoßdaten, wie Kaliber, Gewicht, Bc-Wert, Geschoßgeschwindigkeit usw. individuell eingegeben, um eine präzise Flugbahnberechnung zu ermöglichen.

In der Zeichnung ist ein Ausführungsbeispiel des erfindungsgemäßen Fernrohres schematisch dargestellt, das nachfolgend anhand der Figuren näher beschrieben wird. Dabei zeigen
Fig.1 eine Schrägaufsicht,
Fig.2 eine Schnittdarstellung,
Fig.3 eine Schrägansicht objektivseitig von unten und
Fig.4 eine Aufsicht auf die Innenfläche der Frontplatte.

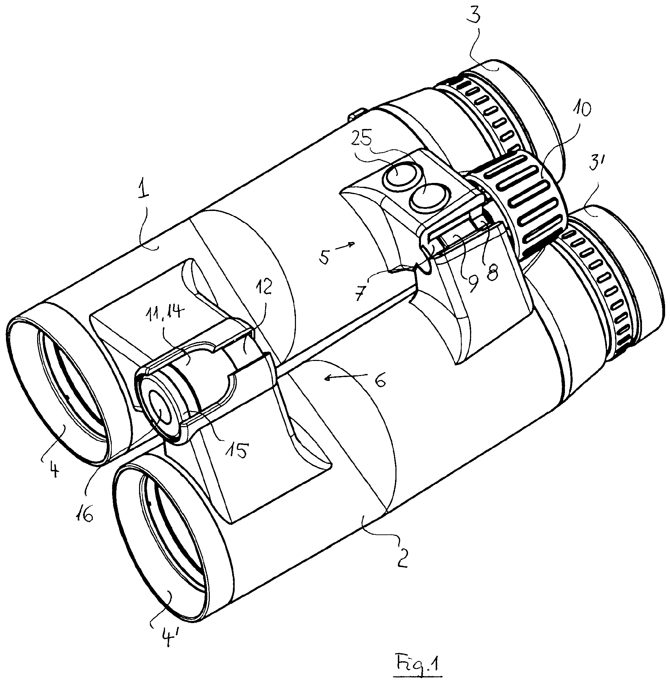

Die in Fig. 1 dargestellte Schrägaufsicht zeigt die in Gebrauchsstellung obere Seite des binokularen Fernrohres. Ein erster Fernrohrtubus 1 und ein zweiter Fernrohrtubus 2 sind über eine auf den Fernrohrtuben 1, 2 angeordnete Knickbrücke gegeneinander geklappt. Zur Einstellung auf den Augenabstand eines Benutzers können die Fernrohrtuben 1, 2 auseinander geklappt werden. Dabei entsteht zwischen den Fernrohrtuben 1, 2 und den Körpern der Knickbrücke ein freier Durchgriff für die Finger des Benutzers. Die Fernrohrtuben 1, 2 enthalten ein Okular 3, 3' und ein fokussierbares Objektiv 4, 4'.

Die Knickbrücke besteht aus einem okularseitigen Gelenkkörper 5 und einem davon getrennten objektivseitigen Gelenkkörper 6. Der okularseitige Gelenkkörper 5 enthält eine am ersten Fernrohrtubus 1 angeformte erste Gelenköse 7 und eine am zweiten Fernrohrtubus 2 angeformte zweite Gelenköse 8. In beide Gelenkösen 7, 8 ist eine Gelenkachse 9 eingesetzt, die mit der Gelenköse 7 fest verschraubt ist. Auf die Gelenkachse 9 ist ein Drehknopf 10 drehbar aufgesetzt. Der Drehknopf 10 wirkt in an sich bekannter Weise durch den Gelenkkörper 5 hindurch mit den Objektiven 4, 4' zur Fokussierung zusammen.

Aus der Aufsicht ist zu entnehmen, dass der Gelenkkörper 5 im Bereich der Gelenkachse 9 und der Gelenkkörper 6 fluchtend dazu jeweils eine Unterbrechung aufweisen, die den Schwenkbereich zur notwendigen Augenweiteneinstellung begrenzt. Die auf die Fernrohrtuben 1, 2 aufgesetzten, jeweils zweigeteilten Gelenkkörper 5, 6 bilden jedoch Schwenkarme, die einen ausreichenden Freiraum zum Fingerdurchgriff zwischen ausgeschwenkten Fernrohrtuben 1, 2 sicherstellen.

Der Empfänger eines Laser-Entfernungsmessers und ein opto-elektronisches Anzeigeelement sind in an sich bekannter Weise innerhalb des ersten Fernrohrtubus 1 angeordnet. Der Empfänger misst durch das Objektiv 4 hindurch das am betrachteten Objekt reflektierte Licht des noch zu beschreibenden Laser-Senders. Das Anzeigeelement kann durch das Okular 3 hindurch betrachtet werden. An dem mit dem ersten Fernrohrtubus 1 verbundenen Teil des Gelenkkörpers 5 sind Schalter und/oder Taster 25 zur Auslösung und/oder Anzeige der Funktionen des Laser-Entfernungsmessers angeordnet.

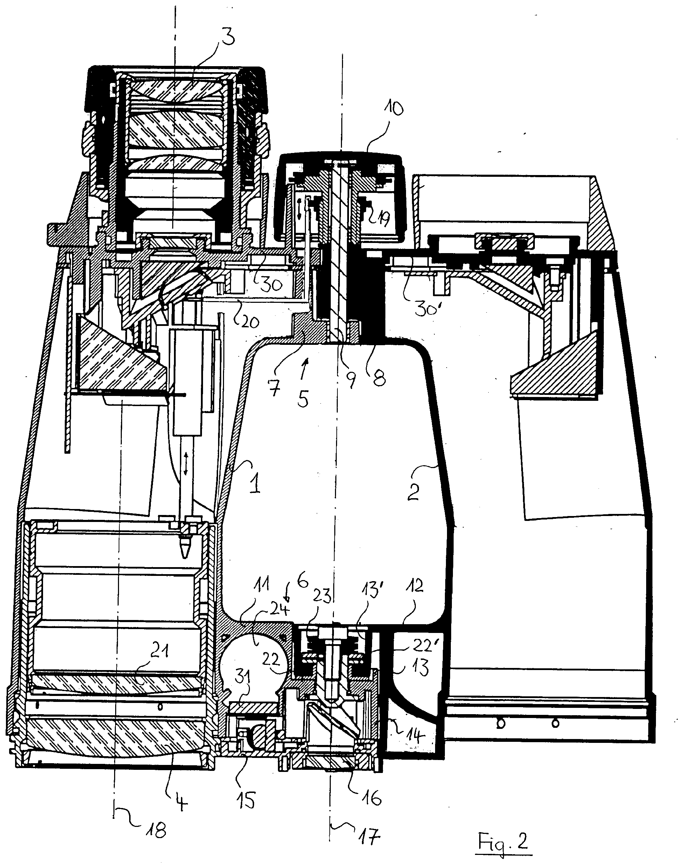

Der objektivseitige Gelenkkörper 6 besteht aus einer an dem ersten Fernrohrtubus 1 angeformten ersten Lasche 11 und einer an dem zweiten Fernrohrtubus 2 angeformten zweiten Lasche 12. Die erste Lasche 11 und die zweite Lasche 12 sind durch hier nicht weiter dargestellte zylindrische Töpfe 13, 13' erweitert, die ineinander eingesetzt und verschwenkbar miteinander verschraubt sind (Fig. 2). An die erste Lasche 11 ist zusätzlich ein in Richtung der Objektive 4, 4' weisendes offenes Gehäuse 14 angesetzt, das mit einer Frontplatte 15 verschließbar ist. An der Frontplatte 15 ist der Sender des Laser-Entfernungsmessers angeordnet, dessen Mess-Strahlung über ein Sendeobjektiv 16 aus dem Gelenkkörper 6 heraus ausgesendet wird. Die Sendeachse des Sendeobjektivs 16 fluchtet mit der Gelenkachse 9. Zur Ausrichtung der Sendeachse auf die durch die Gelenkachse 9 vorgegebene Achsenrichtung ist das Sendeobjektiv in x-y-Richtung justierbar gelagert.

Wegen der auf die Fernrohrtuben 1, 2 aufgesetzten Gelenkkörper 5, 6 liegt die durch die Sendeachse und die Gelenkachse 9 gebildete Achse geringfügig oberhalb und parallel zu der durch die Beobachtungsachsen der Fernrohrtuben 1, 2 gebildeten Ebene.

Die in Fig. 2 dargestellte Schnittebene ist unter einem Winkel zu der durch die Beobachtungsachsen der Fernrohrtuben 1, 2 aufgespannten Ebene gewählt, so dass die Knickbrückenachse 17 mit Sendeachse des Sendeobjektivs 16 und die Beobachtungsachse 18 des Objektivs 4 im ersten Fernrohrtubus 1 in der Schnittebene liegen. Die im Fernrohrtubus 2 noch gezeigten Bauteile sind nicht spiegelsymmetrisch zu den Bauteilen im Fernrohrtubus 1 darstellbar, da sie in einer anderen Schnittebene liegen. Die beiden Fernrohrtuben 1, 2 sind auseinander geklappt, so dass sich zwischen dem okularseitigen Gelenkkörper 5 und dem objektivseitigen Gelenkkörper 6 ein freier Raum für den Fingerdurchgriff ergibt. Der Freiraum wird durch einen Versatz der optischen Achsen des Objektivs 4 und des Okulars 3 noch erweitert. Der Achsenversatz wird in an sich bekannter Weise durch ein nicht weiter dargestelltes Bildaufrichteprisma zwischen Objektiv 4 und Okular 3 erzeugt.

Aus der Schnittdarstellung ist zu entnehmen, dass die Gelenkachse 9 in die okularseitige erste Gelenköse 7 eingeschraubt ist. Die zweite Gelenköse 8 ist auf der Gelenkachse 9 drehbar gelagert. Die Ausrichtung der Bohrungen in den Gelenkösen 7, 8 und deren Passung mit der Gelenkachse 9 müssen sehr genau sein, um eine Parallelverschwenkung der Beobachtungsachsen der Objektive 4, 4' bei der Augenweiteneinstellung sicherzustellen.

Auf der Gelenkachse 9 ist der Drehknopf 10 ebenfalls drehbar gelagert. Innerhalb des Drehknopfes 10 ist eine Spindelmutter 19 höhenverstellbar gelagert. (Pfeil). Die Spindelmutter 19 betätigt ein Gestänge 20, das ein Fokussierglied 21 im Objektiv 4 verstellt. Ein gleiches Übertragungsmittel ist im Fernrohrtubus 2 vorhanden.

Das Fokussierglied 21 ist frontseitig in einer lang gestreckten Fassungshülse gehalten, die in einer daran angepassten Fassungshülse des Objektivs 4 gleitend gelagert ist. Dadurch wird eine kippsichere und zentrierte Verschiebung des Fokussiergliedes 21 zu Objektiv 4 erreicht.

Die objektivseitig an die Fernrohrtuben 1, 2 angeformten Laschen 11, 12 weisen zylindrische Töpfe 13, 13' auf, die vom Durchgriffraum her drehbar ineinander eingesetzt sind. Über die Topfböden 22, 22' sind die Laschen 11, 12 durch Einfügen einer Tellerfeder 23 gegeneinander drehbar verschraubt. Dabei sind geringe Passungstoleranzen erlaubt, um eine Verspannung gegenüber der durch Gelenkachse 9 festgelegten Schwenkachse zu vermeiden. Die zylinderförmigen Töpfe 13, 13' geben dem Gelenkkörper 6 eine gute Verwindungssteifigkeit.

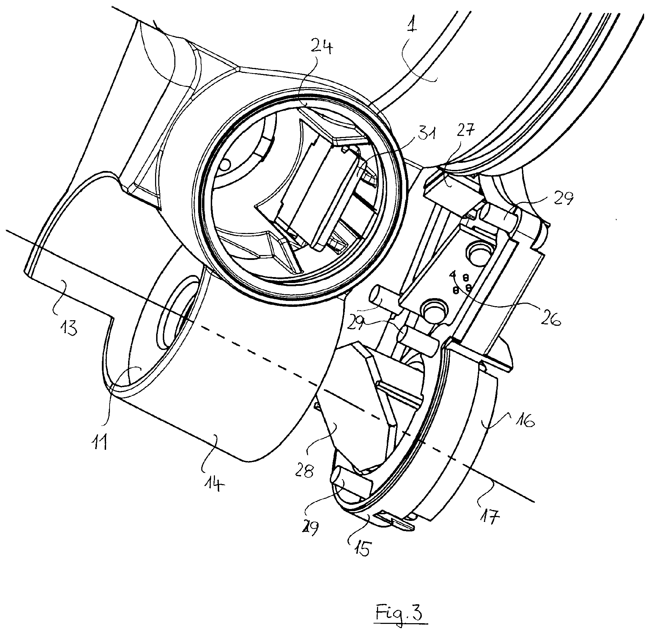

An die erste Lasche 11 ist das Gehäuse 14 angeformt, das mit der Frontplatte 15 frontseitig abgeschlossen ist. Teil des Gehäuses 14 ist auch ein Einschubfach 24, das zur Unterseite des Gelenkkörpers 6 hin zum Einsetzen einer Batterie und/oder weiterer Bauteile offen ist (Fig. 3).

Zum Verbinden der beiden Fernrohrtuben 1, 2 mit der Knickbrücke werden die zylindrischen Töpfe 13, 13' ineinander eingesetzt, die Gelenkösen 7, 8 übereinander positioniert und durch Einstecken und Einschrauben der Gelenkachse 9 zueinander ausgerichtet. Die Verschraubung der Topfböden 22, 22' ist so einzurichten, dass eine leichtgängige Verschwenkung unter Überwindung einer Reibungskraft für eine Fixierung eines eingestellten Augenabstandes möglich ist.

Die beiden Fernrohrtuben 1, 2 sind okularseitig durch Ansetzflächen 30, 30' für die Okulare 3, 3' abgeschlossen, so dass eine Befüllung der Tuben mit einem inerten Gas möglich ist. In die Ansetzflächen 30, 30' können zusätzliche Sensoren zur Messung äußerer physikalischer Parameter eingesetzt sein. Solche Sensoren sind in miniaturisierter Ausführung aus anderen elektronischen Geräten bekannt.

Fig. 3 zeigt eine Schrägansicht von unten auf die an dem ersten Fernrohrtubus 1 angeformte erste Lasche 11 mit dem zylindrischen Topf 13, dem Einschubfach 24, dem Gehäuse 14 und der Frontplatte 15. In das Einschubfach 24 kann eine nicht dargestellte Batterie eingefügt werden. Außerdem ist der Einschub einer Speicherkarte 31 möglich. Über nicht weiter dargestellte Kontakte und Signalleitungen wird in an sich bekannter Weise eine elektrische Verbindung der Batterie und der Speicherkarte 31 mit den im ersten Fernrohrtubus 1 angeordneten elektronischen Bauelementen hergestellt. Der Speicherkarte 31 kann eine Schnittstelle zur Dateneingabe zugeordnet sein.

Auf der Frontplatte 15 ist ein Laser-Sender 26 justierbar auf einer Montageplatte angeordnet. Die Strahlung des Laser-Senders 26 ist auf einen ersten Umlenkspiegel 27 und einen zweiten Umlenkspiegel 28 gerichtet. Der zweite Umlenkspiegel 28 dient dazu, die Laserstrahlung senkrecht zur Ebene der Frontplatte 15 durch das Sendeobjektiv 16 hindurch entlang der Sendeachse 17 auszurichten. Der Brennpunkt des Sendeobjektivs 16 liegt auf dem Laser-Sender 26, so dass das Sendeobjektiv 16 ein kollimiertes Laserstrahlenbündel erzeugt. Die Frontplatte 15 wird nach externer Justierung der optischen Bauelemente über Zapfen 29 in vorbestimmter Lage in das Gehäuse 14 eingesetzt. Die elektrischen Leitungen zur Versorgung des Laser-Senders 26 werden über das Einschubfach 24 mit den übrigen Verbindungsleitungen in den ersten Fernrohrtubus 1 hineingeführt.

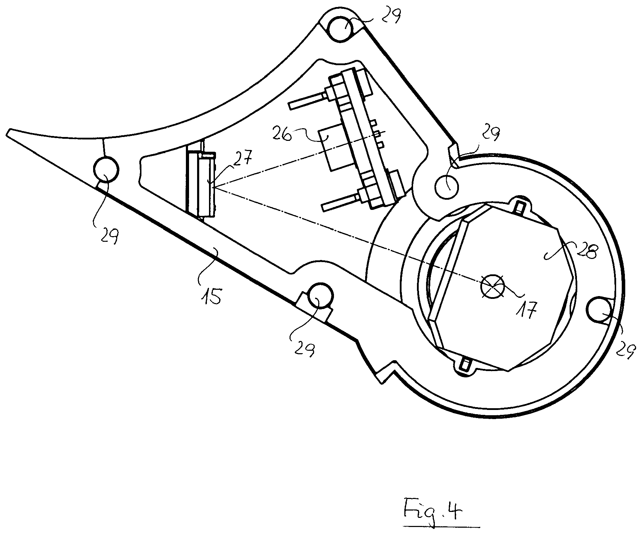

Aus der Aufsicht in Fig. 4 ist der Strahlengang vom Laser-Sender 26 zu den Umlenkspiegeln 27, 28 und senkrecht zur Zeichenebene zu entnehmen.

### Bezugszeichenliste

- 1: erster Fernrohrtubus
- 2: zweiter Fernrohrtubus
- 3, 3': Okular
- 4, 4': Objektiv
- 5: okularseitiger Gelenkkörper
- 6: objektivseitiger Gelenkkörper
- 7: erste Gelenköse
- 8: zweite Gelenköse
- 9: Gelenkachse
- 10: Drehknopf
- 11: erste Lasche
- 12: zweite Lasche
- 13, 13': zylindrischer Topf
- 14: Gehäuse
- 15: Frontplatte
- 16: Sendeobjektiv
- 17: Sendeachse
- 18: Beobachtungsachse
- 19: Spindelmutter
- 20: Gestänge
- 21: Fokussierglied
- 22, 22': Topfboden
- 23: Tellerfeder
- 24: Einschubfach
- 25: Schalter / Taster
- 26: Laser-Sender
- 27: erster Umlenkspiegel
- 28: zweiter Umlenkspiegel
- 29: Zapfen
- 30, 30': Ansetzfläche
- 31: Speicherkarte

## Patentansprüche

1. Binokulares Fernrohr mit integriertem Laser-Entfernungsmesser, bestehend aus
- getrennten ersten und zweiten Fernrohrtuben (1, 2) mit jeweils einem Okular (3, 3') und einem fokussierbaren Objektiv (4, 4'), wobei
- die Fernrohrtuben (1, 2) über eine Knickbrücke zur Augenweiteneinstellung derart miteinander verbunden sind, dass die Fernrohrtuben (1, 2) auseinander geklappt werden können,
- die Knickbrücke einen okularseitigen und einen davon derart getrennten objektivseitigen Gelenkkörper (5, 6) enthält, dass bei ausgeklappten Fernrohrtuben (1, 2) ein Durchgriff zwischen den Fernrohrtuben (1, 2) und den Gelenkkörpern (5, 6) entsteht,
- der okularseitige Gelenkkörper (5) eine mit dem ersten Fernrohrtubus (1) verbundene erste Gelenköse (7) und eine mit dem zweiten Fernrohrtubus (2) verbundene zweite Gelenköse (8) enthält, die über eine Gelenkachse (9) miteinander verbunden sind, auf der ein Drehknopf (10) zur Fokussierung der in den Fernrohrtuben (1, 2) angeordneten Objektive (4, 4') gelagert ist, und wobei
- in dem ersten Fernrohrtubus (1) der Empfänger des Laser-Entfernungsmessers sowie ein opto-elektronisches Anzeigeelement in fester Anordnung zur optischen Beobachtungsachse (18) des ersten Fernrohrtubus (1) angeordnet sind und
- der Sender (26) des Laser-Entfernungsmessers mit seiner Sendeachse (17) parallel zur optischen Beobachtungsachse (18) des ersten Fernrohrtubus (1) und fluchtend mit der Gelenkachse (9) in dem okularseitigen Gelenkkörper (5) an dem objektivseitigen Gelenkkörper (6) zum Aussenden eines Sendestrahls parallel zur Richtung der Beobachtungsachse (18) des ersten Fernrohrtubus (1) angeordnet ist, und wobei
- der objektivseitige Gelenkkörper (6) zwei jeweils mit den ersten und zweiten Fernrohrtuben (1, 2) verbundene erste und zweite Laschen (11, 12) enthält, die um eine mit der Gelenkachse (9) im okularseitigen Gelenkkörper (5) fluchtenden Achse gegenseitig drehbar unter axial wirkender Federkraft (23) miteinander verschraubt sind, und wobei
- die mit dem ersten Fernrohrtubus (1) verbundene erste Lasche (11) in Beobachtungsrichtung hinter der mit dem zweiten Fernrohrtubus (2) verbundenen zweiten Lasche (12) angeordnet ist und der Sender (26) des Laser-Entfernungsmessers an der ersten Lasche (11) angeordnet ist.

2. Fernrohr nach Anspruch 1, **dadurch gekennzeichnet, dass** an die erste Lasche (11) ein in Beobachtungsrichtung offenes, gegenüber dem Fernrohrtubus (1) abgegrenztes Gehäuse (14) angeformt ist, das mit einer Frontplatte (15) verschließbar ist.

3. Fernrohr nach Anspruch 2, **dadurch gekennzeichnet, dass** an der Frontplatte (15) der Sender (26) des Laser-Entfernungsmessers mit mindestens einem Umlenkspiegel (27, 28) zur Ausrichtung der Sendeachse (17) und ein Sendeobjektiv (16) zur Kollimation des Sendestrahles angeordnet sind.

4. Fernrohr nach Anspruch 3, **dadurch gekennzeichnet, dass** das Sendeobjektiv (16) in zwei Achsen justierbar angeordnet ist.

5. Fernrohr nach Anspruch 2, **dadurch gekennzeichnet, dass** in das Gehäuse (14) an der in Gebrauchsstellung des Fernrohres unteren Seite ein verschließbares Einschubfach (24) eingeformt ist.

6. Fernrohr nach Anspruch 5, **dadurch gekennzeichnet, dass** das Einschubfach (24) mit Kontakten zum Anschluss einer Batterie ausgestattet ist.

7. Fernrohr nach Anspruch 6, **dadurch gekennzeichnet, dass** das Einschubfach (24) zusätzlich mit Kontakten zum Anschluss einer auswechselbaren Speicherkarte (31) und/oder einer Schnittstelle zur drahtlosen Datenübertragung ausgestattet ist.

8. Fernrohr nach Anspruch 1, **dadurch gekennzeichnet, dass** auf der in Gebrauchsstellung oberen Fläche des dem ersten Fernrohrtubus (1) zugeordneten Teiles des okularseitigen Gelenkkörpers (5) ein oder mehrere Schalter und/oder Taster (25) zur Betätigung des Laser-Entfernungsmessers und der Anzeigen des Anzeigeelementes angeordneten sind.

9. Fernrohr nach Anspruch 1, **dadurch gekennzeichnet, dass** dem Laser-Entfernungsmesser Druck-, Temperatur-, Neigungs-, Feuchte- und/oder Richtungs-Sensoren in dem ersten Fernrohrtubus (1) zugeordnet sind.

10. Fernrohr nach Anspruch 9, **dadurch gekennzeichnet, dass** die Temperatur-, Feuchte- und/oder Drucksensoren in eine äußere Gehäusefläche des ersten Fernrohrtubus (1) eingesetzt sind.

11. Fernrohr nach Anspruch 10, **dadurch gekennzeichnet, dass** die Sensoren in eine äußere Ansetzfläche (30) des am ersten Fernrohrtubus (1) angeordneten Okulars (3) eingebaut sind.

## Claims

1. Binocular telescope with an integrated laser rangefinder, consisting of:
- separate first and second telescope tubes (1, 2), each with an eyepiece (3, 3') and a lens (4, 4') that can be focused, wherein
- the telescope tubes (1, 2) are connected to one another by a folding bridge for setting the eye spacing in such a way that the telescope tubes (1, 2) can be folded apart,
- the folding bridge contains an eyepiece-side hinge body (5, 6) and a lens-side hinge body (5, 6) which is separate therefrom such that, when the telescope tubes (1, 2) are folded apart, a free passage is created between the telescope tubes (1, 2) and the hinge bodies (5, 6),
- the eyepiece-side hinge body (5) contains a first hinge eye (7) connected to the first telescope tube (1) and a second hinge eye (8) connected to the second telescope tube (2), which are connected to one another by a hinge shaft (9), on which a rotary knob (10) is mounted for focusing the lenses (4, 4') arranged in the telescope tubes (1, 2), and wherein
- the receiver of the laser rangefinder and an optoelectronic display element are arranged in the first telescope tube (1) in a fixed arrangement with respect to the optical observation axis (18) of the first telescope tube (1) and,
- with the transmission axis (17) thereof, the transmitter (26) of the laser rangefinder is arranged on the lens-side hinge body (6), parallel to the optical observation axis (18) of the first telescope tube (1) and flush with the hinge shaft (9) in the eyepiece-side hinge body (5), for emitting a transmission beam parallel to the direction of the observation axis (18) of the first telescope tube (1), and wherein
- the lens-side hinge body (6) has two first and second brackets (11, 12), which are each connected to the first and second telescope tubes (1, 2) and screwed to one another under an axially acting spring force (23) such that they can rotate in opposite directions about an axis flush with the hinge shaft (9) in the eyepiece-side hinge body (5), and wherein
- the first bracket (11) connected to the first telescope tube (1) is arranged behind the second bracket (12) connected to the second telescope tube (2) in the observation direction and the transmitter (26) of the laser rangefinder is arranged on the first bracket (11).

2. Telescope according to Claim 1, **characterized in that** a housing (14), which is open in the observation direction, delimited from the telescope tube (1) and can be sealed by a front plate (15), is formed onto the first bracket (11).

3. Telescope according to Claim 2, **characterized in that** the transmitter (26) of the laser rangefinder with at least one deflection mirror (27, 28) for aligning the transmission axis (17) and a transmission lens (16) for collimating the transmission beam are arranged on the front plate (15).

4. Telescope according to Claim 3, **characterized in that** the transmission lens (16) is arranged adjustable along two axes.

5. Telescope according to Claim 2, **characterized in that** a plug-in compartment (24) that can be sealed is formed into the housing (14) on the lower side in the usage position of the telescope.

6. Telescope according to Claim 5, **characterized in that** the plug-in compartment (24) is equipped with contacts for connecting a battery.

7. Telescope according to Claim 6, **characterized in that** the plug-in compartment (24) is additionally equipped with contacts for connecting an interchangeable memory card (31) and/or an interface for wireless data transmission.

8. Telescope according to Claim 1, **characterized in that** one or more switches and/or pushbuttons (25) for actuating the laser rangefinder and the displays of the display element are arranged on the top side, in the usage position, of the part of the eyepiece-side hinge body (5) associated with the first telescope tube (1).

9. Telescope according to Claim 1, **characterized in that** pressure, temperature, inclination, humidity and/or direction sensors are assigned to the laser rangefinder in the first telescope tube (1).

10. Telescope according to Claim 9, **characterized in that** the temperature, humidity and/or pressure sensors are inserted into an outer housing area of the first telescope tube (1).

11. Telescope according to Claim 10, **characterized in that** the sensors are installed in an outer attachment area (30) of the eyepiece (3) arranged on the first telescope tube (1).

## Revendications

1. Longue-vue binoculaire avec télémètre à laser intégré, composée de
- des premier et deuxième tubes de longue-vue (1, 2) respectivement pourvus d'un oculaire (3, 3') et d'un objectif (4, 4') permettant la mise au point,
- les tubes de longue-vue (1, 2) étant reliés l'un à l'autre par le biais d'un pont articulé servant au réglage de l'écartement interoculaire de telle sorte que les tubes de longue-vue (1, 2) peuvent être écartés l'un de l'autre par dépliage,
- le pont articulé contenant un corps d'articulation (5, 6) côté oculaire et un autre séparé de celui-ci de telle sorte que lorsque les tubes de longue-vue (1, 2) sont écartés, il se produit une traversée entre les tubes de longue-vue (1, 2) et les corps d'articulation (5, 6),
- le corps d'articulation côté oculaire (5) contenant un premier oeillet d'articulation (7) relié au premier tube de longue-vue (1) et un deuxième oeillet d'articulation (8) relié au deuxième tube de longue-vue (2), lesquels sont reliés entre eux par le biais d'un axe d'articulation (9) sur lequel est monté un bouton tournant (10) destiné à effectuer la mise au point des objectifs (4, 4') disposés dans les tubes de longue-vue (1, 2),
- le récepteur du télémètre à laser ainsi qu'un élément d'affichage optoélectronique étant disposés dans le premier tube de longue-vue (1) selon un arrangement fixe par rapport à l'axe d'observation optique (18) du premier tube de longue-vue (1) et
- l'émetteur (26) du télémètre à laser étant disposé avec son axe d'émission (17) parallèle à l'axe d'observation optique (18) du premier tube de longue-vue (1) et en alignement avec l'axe d'articulation (9) dans le corps d'articulation côté oculaire (5) sur le corps d'articulation côté objectif (6) en vue d'émettre un rayon émis parallèlement à la direction de l'axe d'observation (18) du premier tube de longue-vue (1), et
- le corps d'articulation côté objectif (6) contenant deux pattes, une première et une deuxième (11, 12), respectivement reliées au premier et au deuxième tube de longue-vue (1, 2), lesquelles sont vissées l'une à l'autre sous une force de ressort (23) agissant dans le sens axial de manière à pouvoir tourner mutuellement autour d'un axe en alignement avec l'axe d'articulation (9) dans le corps d'articulation côté oculaire (5), et
- la première patte (11), reliée au premier tube de longue-vue (1), étant disposée derrière la deuxième patte (12) reliée au deuxième tube de longue-vue (2) dans le sens de l'observation, et l'émetteur (26) du télémètre à laser étant disposé dans la première patte (11).

2. Longue-vue binoculaire selon la revendication 1, **caractérisée en ce que** sur la première patte (11) est façonné un boîtier (14), ouvert dans le sens de l'observation et délimité par rapport au tube de longue-vue (1), lequel peut être fermé avec une plaque frontale (15).

3. Longue-vue binoculaire selon la revendication 2, **caractérisée en ce que** l'émetteur (26) du télémètre à laser comportant au moins un miroir de renvoi (27, 28) servant à l'orientation de l'axe d'émission (17) ainsi qu'un objectif d'émission (16) servant à collimater le rayon émis sont disposés sur la plaque frontale (15).

4. Longue-vue binoculaire selon la revendication 3, **caractérisée en ce que** l'objectif d'émission (16) est disposé de manière à pouvoir être ajusté dans deux axes.

5. Longue-vue binoculaire selon la revendication 2, **caractérisée en ce qu'**un tiroir (24) pouvant être fermé est façonné dans le boîtier (14) sur le côté de la longue-vue binoculaire qui se trouve en dessous en position d'utilisation.

6. Longue-vue binoculaire selon la revendication 5, **caractérisée en ce que** le tiroir (24) est équipé de contacts servant au raccordement d'une batterie.

7. Longue-vue binoculaire selon la revendication 6, **caractérisée en ce que** le tiroir (24) est en plus équipé de contacts servant au raccordement d'une carte à mémoire (31) interchangeable et/ou d'une interface destinée à la transmission de données sans fil.

8. Longue-vue binoculaire selon la revendication 1, **caractérisée en ce qu'**un ou plusieurs commutateurs et/ou boutons-poussoirs (25) destinés à actionner le télémètre à laser et les indications de l'élément d'affichage sont disposés sur la surface, en haut en position d'utilisation, de la partie du corps d'articulation côté oculaire (5) associé au premier tube de longue-vue (1).

9. Longue-vue binoculaire selon la revendication 1, **caractérisée en ce que** des capteurs de pression, de température, d'inclinaison, d'humidité et/ou de direction dans le premier tube de longue-vue (1) sont associés au télémètre à laser.

10. Longue-vue binoculaire selon la revendication 9, **caractérisée en ce que** les capteurs de température, d'humidité et/ou de pression sont incorporés dans une surface de boîtier extérieure du premier tube de longue-vue (1).

11. Longue-vue binoculaire selon la revendication 10, **caractérisée en ce que** les capteurs sont installés dans une surface d'appui extérieure (30) de l'oculaire (3) disposé sur le premier tube de longue-vue (1).
